# EUROPÄISCHE PATENTSCHRIFT

(11) **EP 1 895 640 B1**
(45) Veröffentlichungstag und Bekanntmachung des Hinweises auf die Patenterteilung: **28.04.2010**
(21) Anmeldenummer: 07006478.7
(22) Anmeldetag: 29.03.2007
(51) Int. Cl.: H02K 3/47, H02K 21/12, H02K 11/00

(54) **Radnabenmotor**
Hub motor
Moteur à moyeu de roue

(30) Priorität: 28.08.2006 DE 102006040222; 28.08.2006 DE 102006040223; 28.08.2006 DE 102006040221; 28.08.2006 DE 102006040220
(43) Veröffentlichungstag der Anmeldung: 05.03.2008
(73) Patentinhaber: Just, Franc, 71229 Leonberg (DE)
(72) Erfinder: Just, Franc, 71229 Leonberg (DE)
(74) Vertreter: LOUIS, PÖHLAU, LOHRENTZ

(56) Entgegenhaltungen:
- EP-A- 0 018 801
- EP-A- 0 422 539
- WO-A-92/11682
- WO-A-2004/012321
- DE-A1- 10 137 201
- DE-A1- 19 852 650
- DE-C1- 4 414 527

## Beschreibung

Die Erfindung betrifft einen elektrischen Radnabenmotor nach dem Oberbegriff des Anspruchs 1.

Elektromotoren zum Antrieb von Fahrzeugen mit autonomer Energiequelle sollen kleine Abmessungen, geringes Gewicht und einen hohen Wirkungsgrad aufweisen. Bei den Fahrzeugen kann es sich beispielsweise um Automobile mit Elektroantrieb oder Hybridantrieb handeln, aber auch um Krankenfahrstühle oder dergleichen. Für diese Anwendungen werden zur Gewichtseinsparung in zunehmendem Maße eisenkernlose Motoren eingesetzt.

In der EP 0 422 539 A1 ist eine elektrische Maschine mit eisenlosen Feldwicklungen beschrieben, bei der es sich um einen Motor oder um einen Generator handeln kann. Die Feldwicklungen des scheibenförmigen Stators stehen in Wechselwirkung mit Permanentmagneten eines oder mehrerer scheibenförmiger Rotoren, die in Richtung der Motordrehachse vor und/oder hinter dem Stator angeordnet sind. Die magnetischen Feldlinien der Permanentmagnete sind axial gerichtet. Die zur Motorwirkung benötigten aktiven Abschnitte der Feldwicklungen sind auf der Vorderseite und der Rückseite des scheibenförmigen Stators angeordnet und über die Stirnkante des Stators geführt.

In der DE 198 52 650 A1 ist ein Motor mit eisenloser Feldwicklung und scheibenförmigem Stator beschrieben, dessen Feldwicklungen mit V-förmigem Verlauf auf der Vorderseite und der Rückseite des Stators ausgebildet sind, wobei die Feldwicklungen über die Stirnseite des Stators geführt sind. Die beiden V-Schenkel der Feldwicklungen bilden radialen Abschnitte, die in Wechselwirkung mit Permanentmagneten zweier vor und hinter dem Stator angeordneter scheibenförmiger Rotoren stehen.

Nachteilig bei beiden Motoren ist die komplizierte Geometrie der Feldspulen sowie die große radiale Erstreckung der Feldspulen, die beispielsweise die Unterbringung des Motors in einer Radnabe verhindert.

In der WO 92/11682 ist eine elektronisch kommutierte Gleichstrommaschine mit einem Permanentmagnetrotor angegeben, der einen bezüglich der Rotationsachse im wesentlichen zylindrischen Ringspalt aufweist, in dem ein homogenes Magnetfeld mit geradlinigem radialen Feldlinienverlauf und ständig wechselnder Polarität ausgebildet ist. Die Gleichstrommaschine weist weiter eine eisenlose mäanderförmige Statoranordnung auf mit Leiterabschnitten, die innerhalb des Ringspalts derart angeordnet sind, dass die längere Seite des Leiterquerschnitts parallel zum Verlauf der Feldlinien ausgerichtet ist.

In der DE 44 14 527 C1 ist eine elektronisch kommutierte Gleichstrommaschine beschrieben, die einen Permanentmagnet-Rotor aufweist mit einem zylindrischen Luftspalt mit geradlinigem radialen Feldlinienverlauf und ständig wechselnder Polarität. Weiter weist der Motor eine eisenlose Statoranordnung mit einer selbsttragenden Statorwicklung auf, die aus drahtförmigem Leitermaterial und ausgehärtetem Kunstharz besteht und die gerade Wicklungsabschnitte aufweist, die sich innerhalb des Luftspalts erstrecken.

Der Erfindung liegt nun die Aufgabe zugrunde, einen im Aufbau und in der Montage einfachen Elektromotor mit eisenlosen Feldspulen zu schaffen.

Die Aufgabe der Erfindung wird durch einen Radnabenmotor mit einem mit einer Radnabe drehfest verbundenen Stator und einen mit einer Radfelge drehfest verbundenen Rotor gelöst, aufweisend mit einer Steuereinheit verbundene eisenlose Feldspulen und Permanentmagnetringe mit einem ringförmigen Luftspalt, wobei in den Luftspalt eintauchende Abschnitte der Feldspulen parallel zur Drehachse des Radnabenmotors ausgerichtet sind, und wobei vorgesehen ist, dass der Radnabenmotor aus zwei gleichartigen Teilmotoren aufgebaut ist, wobei die Wickelkörper beider Teilmotoren einander zugewandt auf einer gemeinsamen Trägerplatine angeordnet sind. und

Der Begriff "eisenlos" umfasst nicht nur das Material Eisen oder eine Eisenlegierung (beispielsweise Dynamoblech) an sich, sondern beliebige magnetische Materialien, vorzugsweise weichmagnetische Materialien. Beispielsweise sind Ferrite als magnetisches Kernmaterial für Feldspulen verwendbar. Spulen mit Ferritkern sind beispielsweise aus der Hochfrequenztechnik bekannt.

Der erfindungsgemäße Radnabenmotor zeichnet sich dadurch aus, dass der Rotor ringförmig aufgebaut ist und die für die Motorfunktion entscheidenden Bauteile, wie die Feldspulen, am Umfang des Motors konzentriert sind. Ein solcher Motor kann zugleich die Funktion einer Radnabe übernehmen und kann in axialer Richtung eine geringe Bautiefe aufweisen. Das Motorgehäuse ist vorteilhafterweise so ausgebildet, dass es sich im Bereich der Radfelge über die Breite der Radfelge erstreckt und unterhalb der Radfelge einen Ringraum bildet, der die Permanentmagnetringe und die Feldspulen aufnimmt und sodann im Bereich des Radkranzes zurückspringt, so dass das Querschnittsprofil des Motorgehäuses in etwa dem Profil einer umgangssprachlich als Autofelge bezeichneten Baugruppe entspricht, die einstückig die Felge, den Radkranz und den Radflansch umfasst.

Durch die Ausrichtung der in den Luftspalt des Rotors eintauchenden Abschnitte der Feldspulen parallel zur Drehachse des Radnabenmotors können die Feldspulen im Aufbau einfach gehalten sein.

Da der Radnabenmotor aus zwei gleichartigen Teilmotoren aufgebaut ist, wobei die Wickelkörper beider Teilmotoren einander zugewandt auf einer gemeinsamen Trägerplatine angeordnet sind, ist der Wickelkörper als ein Verbundkörper mit symmetrischem T-förmigen Querschnitt ausgebildet, der gegenüber einem topfförmigen Körper mit symmetrischem L-Querschnitt eine Symmetrieebene aufweist, so dass Zwangskräfte infolge einseitiger Belastung auf die Achslager vermieden sind. Durch die Aufteilung des Radnabenmotors in zwei Teilmotore ist die pro Wickelkörper umgesetzte elektrische Leistung halbiert, so dass die thermische Belastung der Feldspulen reduziert ist und zugleich durch die Vergrößerung der Abstrahlungsfläche die Abführung der Verlustwärme verbessert ist.

Es kann optional vorgesehen sein, dass der Stator die Feldspulen trägt. Diese Ausbildung kann bevorzugt sein, weil der Rotor keine elektrischen Zuleitungen benötigt, so dass der Radnabenmotor einen besonders einfachen Aufbau aufweist.

Es ist aber auch möglich, dass der Rotor die Feldspulen trägt. Diese Ausbildung kann bevorzugt sein, wenn im stromlosen Zustand des Radnabenmotors die rotierende Masse gering sein soll, beispielsweise wenn die Verwendung des Radnabenmotors für ein Solarmobil oder dergleichen vorgesehen ist.

Es kann vorgesehen sein, dass das Motorgehäuse zum einen einen Träger für die Permanentmagnetringe bildet und zum anderen ein Joch für die Magnetpole der Permanentmagnetringe bildet oder aufweist. Es kann also vorgesehen sein, dass das Motorgehäuse zugleich den magnetischen Rückschluss bildet, so dass der Magnetfluss geschlossen ist und die Kraftwirkung optimal ist.

Es kann weiter vorgesehen sein, dass das Motorgehäuse zur besseren Montage der Feldspulen im Motorinneren aus mindestens drei Einzelteilen besteht. Das Motorgehäuse kann beispielsweise aus einem zylindrischen Abschnitt und zwei an die beiden Stirnseiten des Zylinders angeflanschte Abschnitte gebildet sein, so dass zunächst der innere Aufbau des Motors in den zylindrischen Abschnitt eingesetzt wird und sodann die beiden stirnseitigen Abschnitte montiert werden.

Es kann vorgesehen sein, dass die Feldspulen zumindest abschnittsweise aus Flachbandmaterial ausgebildet sind. Durch die Verwendung von Flachbandmaterial ist die Materialauswahl nicht auf gut verformbare Werkstoffe, wie Kupfer, Aluminium oder Silber beschränkt. Es können auch spröde und/oder nicht ziehfähige Werkstoffe verwendet werden, die sich nur durch Walzen oder durch Aufdampfen auf ein Trägermaterial ausformen lassen oder auch Verbundwerkstoffe mit beispielsweise schichtweisem Aufbau. Auf diese Weise können Eigenschaften des Flachbandmaterials - vorzugsweise die elektrischen und/oder thermischen Eigenschaften - in einem weiten Bereich variiert werden. Vorteilhafterweise kann vorgesehen sein, dass die aktiven Abschnitte der Feldspulen, d.h. die in den Luftspalt eintauchenden Abschnitte der Feldspulen aus Flachbandmaterial ausgebildet sind, das in seiner Längenerstreckung parallel zur Drehachse des Radnabenmotors orientiert ist.

Bei dem Flachbandmaterial kann es sich um einen Folienkörper mit einer elektrisch isolierenden Trägerfolie und einer auf der Trägerfolie angeordneten elektrisch leitfähigen Schicht handeln. Die auf solchen Folienkörpern aufgebrachten elektrisch leitfähigen Schichten können beispielsweise durch Aufdampfen abgeschieden sein. Wegen der geringen Schichtdicke können auch spröde Materialien vorgesehen sein, die wegen ihrer Bruchempfindlichkeit in anderer Konfektionierung nicht zu Wicklungen verarbeitet werden können.

Weiter kann vorgesehen sein, dass die Feldspulen aus einem Wickel aus Flachbandmaterial gebildet sind. Ein solcher Wickel kann besonders einfach als Rahmenspule ausgebildet werden, bei der zwei parallele Abschnitte des Wickels die aktiven Abschnitte der Feldspule bilden können, wie weiter unten beschrieben.

In einer vorteilhaften Ausbildung kann vorgesehen sein, dass die Feldspulen aus Wicklungsabschnitten ausgebildet sind, die elektrisch miteinander verbunden sind. Es kann also vorgesehen sein, dass beispielsweise die Eckbereiche einer rahmenförmigen Feldspule nicht aus Flachbandmaterial ausgebildet ist, sondern beispielsweise als eine Löt- oder Schweißverbindung ausgeführt ist, die zwei winkelig zueinander angeordnete Wicklungsabschnitte der Feldspule miteinander verbindet.

Weiter kann vorgesehen sein, dass die Wicklungsabschnitte als Schichtverbund ausgebildet sind, wobei die elektrisch leitfähigen Schichten des Schichtverbundes mindestens an den Schmalkanten des Flachbandmaterials stoffschlüssig miteinander verbunden sind. Es kann beispielsweise vorgesehen sein, die elektrisch leitfähigen Schichten durch Löten oder Schweißen miteinander zu verbinden, wie vorstehend ausgeführt.

Es kann vorgesehen sein, dass die Wicklungsabschnitte durch Verbindungsabschnitte elektrisch miteinander verbunden sind. Die Verbindungsabschnitte können beispielsweise mit den Wicklungsabschnitten wie zuvor beschrieben stoffschlüssig verbunden werden. Die Verbindungsabschnitte können dazu beispielsweise besondere Verbindungselemente aufweisen, welche die Schmalkanten der Wicklungsabschnitte übergreifen, oder sie können an den Schmalkanten als Verbindungsleitungen in die besagten Wicklungsabschnitte eingelegt sein. Die Verbindungsabschnitte können eine andere Geometrie und/oder einen anderen Aufbau und/oder ein anderes Material aufweisen als die Wicklungsabschnitte der Feldspulen. Es kann beispielsweise vorgesehen sein, dass die Verbindungsabschnitte als Leiterzüge einer Leiterplatte ausgebildet sind, die beispielsweise als kreisringförmige mehrlagige Leiterplatte ausgebildet sein kann. Weiter kann vorgesehen sein, dass die aktiven Abschnitte der Feldwicklungen auf einer als Zylindermantel geformten Leiterplatte angeordnet sind, die an den beiden Stirnseiten mit den kreisringförmigen Verbindungsleiterplatten verbunden ist. Die drei genannten Leiterplatten können auch einstückig ausgebildet sein, beispielsweise als ein aus einem mehrschichtigen Folienkörper geformtes Formteil.

In einer weiteren vorteilhaften Ausbildung ist vorgesehen, dass auf den Verbindungsabschnitten mindestens eine Ferritperle oder dergleichen angeordnet ist. Der Begriff "Ferritperle" umfasst Körper aus magnetischer Sinterkeramik, insbesondere weichmagnetischer Sinterkeramik, die von den Verbindungsabschnitten durchgriffen und/oder umschlungen sein können. Es kann sich also beispielsweise um kugelförmige, lochscheibenförmige oder stabförmige Körper handeln. Geeignete stabförmige Körper können an ihren Endabschnitten Durchgangslöcher aufweisen, um auf die stabförmigen Körper gewickelte Verbindungsabschnitte zu sichern. Die Ferritperlen wirken als Dämpfungsglieder zum Abbau von Stromschaltspitzen in den Feldspulen und können darüber hinaus ein Funkentstörmittel sein.

Weiter kann vorgesehen sein, dass in den Wickel oder in die Wicklungsabschnitte der Feldspule magnetisch leitfähiges Material eingebracht ist. Das Material kann in Form von magnetischen Partikeln vorliegen, die beispielsweise auf einer Trägerfolie vorzugsweise gleichmäßig angeordnet sein können. Durch das in den Wickel oder die Wicklungsabschnitte eingebrachte magnetisch leitfähige Material kann die Magnetflussdichte im Luftspalt des Permanentmagnetrings erhöht sein, so dass die Kraftwirkung zwischen Feldspule und Permanentmagnetring verbessert sein kann, ohne den Eintrag elektrischer Energie in die Feldspulen erhöhen zu müssen.

Es kann vorgesehen sein, dass die Feldspulen als Rahmenspulen ausgebildet sind. Die Rahmenspule kann ein Rechteck oder Quadrat umschreiben. Die Wicklung der Rahmenspule kann einen rechteckigen Querschnitt aufweisen, wobei die Schmalseite des rechteckigen Querschnitts tangential gerichtet sein kann und die Längsseite des rechteckigen Querschnitts axial gerichtet sein kann. Zur besseren Ausnutzung des Wickelraums kann auch vorgesehen sein, dass die in den Luftspalt eintauchenden Wicklungsabschnitte der Feldspule mit trapezförmigem Querschnitt ausgebildet sind, d.h. mit sich in Richtung auf die Drehachse des Radnabenmotors hin verjüngendem Querschnitt.

Es kann vorgesehen sein, dass die Feldspulen einen freitragenden vorzugsweise topfförmigen Wickelkörper bilden. Die Feldspulen können dabei auf dem zylindrischen Topfmantel angeordnet sein, wobei der Topfboden als Stütz- und/oder Tragelement für den Topfmantel dienen kann. Der Topfboden kann beispielsweise die Zu- und Ableitungen der Feldspulen aufnehmen. Da der Radnabenmotor aus zwei Teilmotoren ausgebildet ist, kann der Wickelkörper als ein beidseitig offener Topf mit mittig angeordnetem Boden ausgebildet sein.

Weiter kann vorgesehen sein, dass der Wickelkörper in eine Vergussmasse eingebettet ist. Bei der Vergussmasse kann es sich beispielsweise um einen selbsthärtenden Zweikomponenten-Kunststoff handeln, beispielsweise ein Gießharz. Es kann vorgesehen sein, den Wickelkörper in eine Gießform einzubringen und sodann die Gießform mit dem Gießharz auszugießen. Es kann aber auch vorgesehen sein, die Gießform mit einem thermoplastischen Kunststoff auszuspritzen.

In einer vorteilhaften Ausgestaltung kann vorgesehen sein, dass in die Vergussmasse magnetisch leitfähiges Material eingebracht ist. Die funktionelle Bedeutung beispielsweise magnetischer Partikel ist bereits weiter oben dargestellt worden. Die magnetischen Partikel können aber zugleich als Füllmasse wirken, welche die mechanische Festigkeit der Vergussmasse erhöht.

Es kann vorgesehen sein, dass der Wickelkörper mit der Trägerplatine stoffschlüssig und/oder formschlüssig verbunden ist. Die stoffschlüssige Verbindung kann beispielsweise beim Einbetten des Wickelkörpers in die Vergussmasse ausgebildet sein, wobei zugleich eine formschlüssige Verbindung ausgebildet sein kann, indem die Vergussmasse beispielsweise dafür in die Trägerplatine eingebrachte Löcher oder Hinterschneidungen durchdringt.

Es kann vorgesehen sein, dass die Permanentmagnetringe aus 2 • n Magnetpaaren ausgebildet sind und pro Permanentmagnetring (41, 42) m • n Feldspulen (51 bis 55) vorgesehen sind, die n Feldspuleneinheiten bilden, die abschnittsweise in den ringförmigen Luftspalt eintauchen. Es ist also eine gerade Anzahl von Magnetpaaren vorgesehen, wobei eine Feldspule jeweils in die Luftspalte zweier benachbarter Magnetpaare eintaucht.

Es kann vorgesehen sein, dass die Anzahl m der Feldspulen einer Feldspuleneinheit m ≥ 1 ist, vorzugsweise dass m = 3 bis 5 ist.
In einer bevorzugten Ausbildung ist m = 5.

Weiter kann vorteilhafterweise vorgesehen sein, dass jeweils die erste bis m-te der m Feldspulen einer Feldspuleneinheit eine voneinander unabhängig steuerbare Feldspulengruppe bilden, die mit jeweils einer von m Endstufen der Steuereinheit verbunden ist. Auf diese Weise können in jedem der beiden weiter oben beschriebenen Teilmotoren des erfindungsgemäßen Radnabenmotors m unabhängige Untermotoren gebildet werden, die im Normalfall den Teilmotor bilden. Fällt in einer Feldspuleneinheit eine Feldspule aus, beispielsweise die zweite Feldspule, dann kann vorgesehen sein, alle zweiten Feldspulen zu deaktivieren, ohne jedoch die Funktion des betroffenen Teilmotors in Frage zu stellen. Sind beispielsweise m = 5 Feldspulen pro Feldspuleneinheit vorgesehen, dann verfügt der Teilmotor noch über 4 funktionsfähige Untermotoren, d.h. er kann noch 80 % Leistung liefern. Eine solche Motorausbildung ist insbesondere für den Betrieb eines Fahrzeugs von Vorteil, denn das Fahrzeug kann trotz des beschriebenen Ausfalls einer Feldspule seine Fahrt mindestens bis zur nächsten Werkstatt fortsetzen.

Weiter kann vorgesehen sein, dass die m Feldspulen einer Feldspuleneinheit mit teilweiser Überlappung angeordnet sind. Die m Feldspulen sind also wie Dachschindeln angeordnet, so dass die in den Luftspalt eintauchenden aktiven Abschnitte der Feldspulen mit gleichem Teilungsabstand t angeordnet sind. Bei dem Teilungsabstand handelt es sich nicht um den Abstand zwischen aktiven Abschnitten zweier benachbarter Feldspulen, beispielsweise der Hinterkante des einen Abschnitts und der Vorderkante des anderen Abschnitts, sondern um den Abstand analoger Strecken bzw. Punkte der Abschnitte, beispielsweise um den Abstand der Vorderkante des einen Abschnitts zu der Vorderkante des anderen Abschnitts oder um den Abstand der Mittelpunkte der beiden Abschnitte. Der Teilungsabstand kann durch den Abstand auf der Mantelfläche des durch die Feldspulen gebildeten Hohlzylinders definiert sein oder durch einen Winkelabstand, wobei der Scheitelpunkt des Teilungswinkels mit der Drehachse des Rotors zusammenfällt. Die beiden aktiven Wicklungsabschnitte der Feldspulen haben den Abstand A = m • t, wobei m die Anzahl der Feldspulen einer Feldspuleneinheit bezeichnet.

Insbesondere wenn die Feldspulen als rahmenförmige Feldspulen ausgebildet sind, kann es beim Überlappen der Feldspulen zu Kollisionen kommen. Deshalb kann vorgesehen sein, dass einige der Feldspulen um die Längsachse der bandförmigen Wicklung gefaltet werden. Dazu werden die Verbindungsabschnitte der aktiven Abschnitte der Feldspulen um 90° oder um - 90° geschwenkt, so dass sie vor oder hinter der vorzugsweise mittleren Feldspule verlaufen. Weiter kann vorgesehen sein, dass die aktiven Wicklungsabschnitte einiger Feldspulen mit größerer Länge ausgebildet sind, so dass die Verbindungsabschnitte über und unter den anderen Feldspulen verlaufen.

Weiter kann vorgesehen sein, dass die magnetischen Feldlinien der Magnetpaare radial gerichtet sind, d.h. zur Drehachse des Radnabenmotors hin oder von der Drehachse des Radnabenmotors fort gerichtet sind.

Weiter kann vorgesehen sein, dass zwei aufeinanderfolgende Magnetpaare mit entgegengesetzter magnetischer Flussrichtung ausgebildet sind. Wie weiter oben ausgeführt, taucht jede Feldspule bei rahmenförmiger Ausbildung mit den beiden parallel zur Drehachse des Radnabenmotors gerichteten Wicklungsabschnitten jeweils in die Luftspalte zweier benachbarter Magnetpaare ein. Da es sich bei den Wicklungsabschnitten jeweils um einem hinführenden und einem rückführenden Abschnitt handelt, sind deren Magnetfelder folglich gegensätzlich gepolt, so dass die Wechselwirkungskräfte mit den mit gegensätzlicher magnetischer Flussrichtung ausgebildeten benachbarten Magnetpaaren die gleiche Wirkrichtung haben.

Es kann vorgesehen sein, dass zwei aufeinanderfolgende Magnetpaare mit Abstand zueinander angeordnet sind. Der Abstand kann so gewählt sein, dass er etwa der Breite des Abschnitts einer Feldspule entspricht. Es kann aber auch vorgesehen sein, dass zwei aufeinanderfolgende Magnetpaare ohne Abstand, d.h. mit Kontakt, oder mit minimalem Abstand angeordnet sind, beispielsweise unter Ausbildung einer Klebefuge.

Vorteilhafterweise kann vorgesehen sein, dass die Feldspule stromlos geschaltet ist, wenn der Rotor eine Drehlage einnimmt, bei der die in den Luftspalt des Permanentmagnetrings eintauchenden Wicklungsabschnitte der Feldspule sich außerhalb des Luftspalts befinden. Auf diese Weise wird Energie gespart, ohne die Motorleistung herabzusetzen.

Die elektrischen Anschlüsse der Feldspule können unmittelbar mit einem elektronischen Schaltglied der Steuereinheit verbunden sein. Bei dem elektronischen Schaltglied kann es sich vorzugsweise um ein Leistungsschaltglied handeln, wie einen Leistungstransistor, Triac oder dergleichen elektronisches Bauelement, das in der Lage ist, den für den Betrieb der Feldspule notwendigen Betriebsstrom zu schalten. Das elektronische Schaltglied weist einen Steuereingang auf, über den es idealerweise leistungslos vom leitenden in den nichtleitenden Zustand und umgekehrt schaltbar ist. Eine solche Anordnung ist vorteilhaft, weil sie Leitungsverluste zwischen dem elektronischen Schaltglied und der Feldspule vermeidet. Sie ist weiter vorteilhaft, weil sie parasitäre Leitungskapazitäten und/oder Leitungsinduktivitäten reduziert, die leistungsmindernd wirken können und/oder elektromagnetische Störstrahlung verursachen können.

Vorteilhafterweise können die elektronischen Schaltglieder auf einem gemeinsamen Trägersubstrat angeordnet sein. Es kann sich bei den auf einem gemeinsamen Trägersubstrat vereinten elektronischen Schaltgliedern um ein elektronisches Mehrfachbauelement handeln, beispielsweise um einen Mehrfachtransistor, ggf. auch um ein Hybridbauelement, bei dem unverkapselte Bauelemente auf einer Trägerplatine angeordnet und elektrisch miteinander verbunden sind.

Weiter kann vorgesehen sein, dass die Steuereinheit auf dem Trägersubstrat angeordnet ist. Es kann also ein komplexes integriertes elektronisches Bauelement vorgesehen sein, das Steuerelektronik und Leistungselektronik auf einem Chip vereinigt. In die Steuerelektronik sind ausdrücklich Sensoren einbezogen, beispielsweise Temperatursensoren zur Überwachung der Betriebstemperatur der Steuerelektronik und/oder der Leistungselektronik. Wie weiter oben beschrieben, ist vorgesehen, dass die Feldspulen zu m Gruppen zusammengefasst sind, die einzeln ansteuerbar sind. Demzufolge ist kann vorteilhafterweise vorgesehen sein, dass die Steuereinheit m getrennt steuerbare Einheiten aufweist. Auf diese Weise ist auch die Ausfallsicherheit der Steuereinheit verbessert, denn beim Ausfall einer solchen steuerbaren Einheit stehen noch 80 % der Leistung des Teilmotors, d.h. bei zwei Teilmotoren noch 90 % Leistung des erfindungsgemäßen Radnabenmotors zur Verfügung.

In einer vorteilhaften Ausgestaltung ist vorgesehen, dass mehrere elektronische Schaltglieder eine gemeinsame Schutzkapselung aufweisen. Die Schutzkapselung kann abschnittsweise vorgesehen sein oder sämtliche elektronischen Schaltglieder überdecken. Es kann beispielsweise vorgesehen sein, dass n • m schutzgekapselte Leistungsschalter auf der Trägerplatine angeordnet sind.

Die Schutzkapselung kann darüber hinaus als Kühlkörper für die elektronischen Schaltglieder ausgebildet sein. Es kann auch vorgesehen sein, dass das Trägersubstrat als Kühlkörper ausgebildet ist oder mit der Schutzkapselung mit geringem thermischen Übergangswiderstand verbunden ist. Ein geringer thermischer Übergangswiderstand kann beispielsweise durch das Auftragen einer Thermoleitpaste ausgebildet werden.

Der oder die Kühlkörper können mit Kühlrippen ausgebildet sein (Luftkühlung), sie können aber auch Kühlkanäle aufweisen, die von einer Kühlflüssigkeit durchströmt sind. Es kann beispielsweise vorgesehen sein, die Kühlflüssigkeit durch einen Wärmetauscher zu leiten und die Abwärme zur Fahrzeugklimatisierung zu nutzen.

Weiter kann vorgesehen sein, dass die Steuereinheit innerhalb der Schutzkapselung angeordnet ist. Dabei kann die Schutzkapselung lediglich zum Schutz vor Beschädigung und/oder Verschmutzung vorgesehen sein und/oder als Kühlkörper. Der Schutz vor Verschmutzung kann den Schutz vor Gasen und/oder Dämpfen einschließen, beispielsweise vor Sauerstoff und/oder Wasserdampf. Beide Komponenten können Halbleiterschaltungen vorzeitig altern lassen oder zerstören.

Alternativ kann vorgesehen sein, dass die Steuereinheit auf der Trägerplatine angeordnet ist. Die Steuereinheit kann als integriertes Bauelement oder als "gedruckte" Schaltung mit diskreten Bauelementen ausgebildet sein. Es kann sich beispielsweise um eine gekapselte Schaltung handeln, bei der beispielsweise die Bauelemente in Silikonkautschuk eingebettet sind. Eine derart gekapselte Schaltung ist besonders für den rauen Fahrzeugbetrieb geeignet, weil unempfindlich gegen Stöße und jegliche Verschmutzung. Weitere Schutzmaßnahmen können vorgesehen sein, um das schädliche Einwirken von Kraftstoff auf Silikonkautschuk zu unterbinden.

Es kann vorgesehen sein, dass die Steuereinheit mit mindestens einem elektrischen Schleifring verbunden ist. Wenn nur ein Schleifring vorgesehen ist, kann eine Masseverbindung als Rückleitung vorgesehen sein.

Weiter kann vorgesehen sein, dass die Steuereinheit mit elektrischen Kontakten verbunden ist. Es kann sich dabei beispielsweise um Steckkontakte oder um Schraubkontakte handeln. Es kann beispielsweise vorgesehen sein, dass der Nabenmotor beim Aufstecken auf einen Achsstummel mit einer Fahrzeugbatterie und mit einem Steuermodul zur Übermittlung von Steuerbefehlen an die Steuereinheit und/oder zur Übermittlung von Rückmeldesignalen von der Steuereinheit verbunden wird.

Es kann auch vorgesehen sein, dass die Steuereinheit drahtlos angesteuert ist. Elektrische Kontakte können im Fahrzeugbetrieb zur Übermittlung von Steuersignalen unzuverlässig sein und/oder die zügige Montage bzw. Demontage des Radnabenmotors behindern.

Eine vorteilhafte Ausbildung sieht vor, dass die Steuereinheit induktiv angesteuert ist.

Was die Ausbildung der Steuereinheit betrifft, kann vorgesehen sein, dass es sich bei der Steuereinheit um eine Steuereinheit für Pulsweitenmodulation handelt. Bei der Pulsweitenmodulation handelt es sich um ein Verfahren, bei der durch die Variation der Pulsweite bei konstanter Pulshöhe, d.h. bei konstanter Spannung, die Drehzahl eines Gleichstrommotors eingestellt wird. Die Pulsfrequenz kann beispielsweise 28 kHz sein. Es kann weiter vorgesehen sein, dass positive und negative Impulse aufeinander folgen, so dass durch das Verhältnis der Pulsweite der positiven und der negativen Impulse auch die Drehrichtung des Gleichstrommotors steuerbar ist. Bei einem Pulsverhältnis von 1:1 steht der Motor, wobei der Motor infolge des ständigen Umpolens der Gleichspannung rüttelt. Der Effekt des Rüttelns bei Stillstand sowie bei kleinen Drehzahlen reduziert die Lagerreibung, so dass der Motor auch bei kleinen Drehzahlen gut steuerbar ist.

Zur Drehlagebestimmung des Rotors können Hallsensoren vorgesehen sein.

Es kann vorgesehen sein, dass die Hallsensoren mit einem Bussystem verbunden sind.

Wenn n• m Feldspulen vorgesehen sind, sind m Hallsensoren benötigt, um die Lage des Rotors festzustellen, so dass mit Hilfe dieser Lageinformationen von der Steuereinheit ein magnetisches Drehfeld durch die Feldspulen bereitstellbar ist. Wie bereits weiter oben beschrieben, ist es durch die m Hallsensoren möglich, jeden der m Untermotoren der beiden Teilmotoren getrennt zu erfassen.

Die vorstehend genannten Merkmale stellen sicher, dass die Ansteuerung der Feldspulen in optimaler und energiesparender Weise erfolgt. Weil es sich um eine kontaktlose Motorsteuerung handelt, ist sie besonders für den rauen Fahrzeugbetrieb geeignet.

Weiter kann vorgesehen sein, dass der Rotor mit einer Bremsscheibe drehfest verbunden ist.

Wenngleich vorgesehen sein kann, der Radnabenmotor als Generator betreibbar ist und so als Motorbremse nutzbar ist, kann die Bremsscheibe als Zusatzbremse beim Betrieb des Radnabenmotors vorgesehen sein oder als Betriebsbremse bei abgeschaltetem Motor.

Der erfindungsgemäße Radnabenmotor ist vielfältig nutzbar. Weil er als Gleichstrommotor mit eisenloser Feldwicklung ausgebildet ist, ist der Rotor im stromlosen Betriebszustand des Motors ohne die bei herkömmlichen Gleichstrommotor magnetischen Rastmoments drehbar.

Der erfindungsgemäße Radnabenmotor ist daher besonders vorteilhaft als Antriebsmotor für fahrbare Transportstühle, wie sie Kranke und/oder Behinderte benötigen, geeignet. Wegen der vergleichsweise geringen Masse des erfindungsgemäßen Radnabenmotors und des fehlenden Rastmoments infolge der eisenlosen Feldspulen ist der Transportstuhl bei abgeschaltetem Motor leicht verfahrbar.

Eine weitere vorteilhafte Verwendung des Radnabenmotors ist der Antrieb eines Elektrofahrzeugs. Insbesondere Solarfahrzeuge sind aus den vorstehend genannten Gründen vorteilhaft antreibbar.

Weiter ist der erfindungsgemäße Radnabenmotor vorteilhaft einsetzbar für Hybridfahrzeuge, die neben einem oder mehreren Elektromotoren über einen Verbrennungsmotor verfügen. Weil es sich bei dem Radnabenmotor um einen in weiten Drehzahlbereichen steuerbaren Motor handelt, wird kein Zusatzgetriebe benötigt. Der Radnabenmotor ist auch zur Nachrüstung herkömmlicher Fahrzeuge mit Verbrennungsmotor nachrüstbar, indem im wesentlichen die Radfelgen gegen den Radnabenmotor ausgetauscht werden.

Weitere Einsatzgebiete des erfindungsgemäßen Radnabenmotors sind Ultraleichtflugzeuge, Wasserfahrzeuge, Schienenfahrzeuge und Arbeitsgeräte.

Die Lösung der Aufgabe wird durch das Prinzip erreicht, dass es sich bei dem Radnabenmotor um einen Elektromotor für Gleichstrom handelt, der aufweist: 2 Magnetringe die links und rechts an der äußeren Wand von Gehäuse parallel zur Achse angeordnet sind.

Im folgenden wird die Erfindung anhand von mehreren Ausführungsbeispielen unter Zuhilfenahme der beiliegenden Zeichnungen beispielhaft verdeutlicht.

Es zeigen
- Fig. 1: eine schematische Schnittdarstellung eines Ausführungsbeispiels des erfindungsgemäßen Radnabenmotors;
- Fig. 2: eine schematische Schnittdarstellung der Anordnung der Feldspulen längs der Schnittlinie II-II in Fig. 1;
- Fig. 3: eine schematische Darstellung dreier benachbarter Feldspulen in Fig. 2 in perspektivischer Ansicht;
- Fig. 4a und 4b: eine schematische Darstellung eines Anordnungsbeispiels von fünf Feldspulen;
- Fig. 5: ein schematisches Schaltbild zur Ankopplung einer Feldspule an ein Steuergerät für Pulsweitenmodulation;
- Fig. 6: ein schematisches Spannungs-Zeit-Diagramm der Pulsweitenmodulation;
- Fig. 7: ein schematisches Schaltbild zur prinzipiellen Ankopplung einer mehrteiligen Feldspule an ein Steuergerät für Pulsweitenmodulation;
- Fig. 8: ein schematisches Spannungs-Zeit-Diagramm der Pulsweitenmodulation in Fig. 7;
- Fig. 9: eine schematische Darstellung zur Veranschaulichung des Wirkprinzips des Radnabenmotors in Fig. 1.

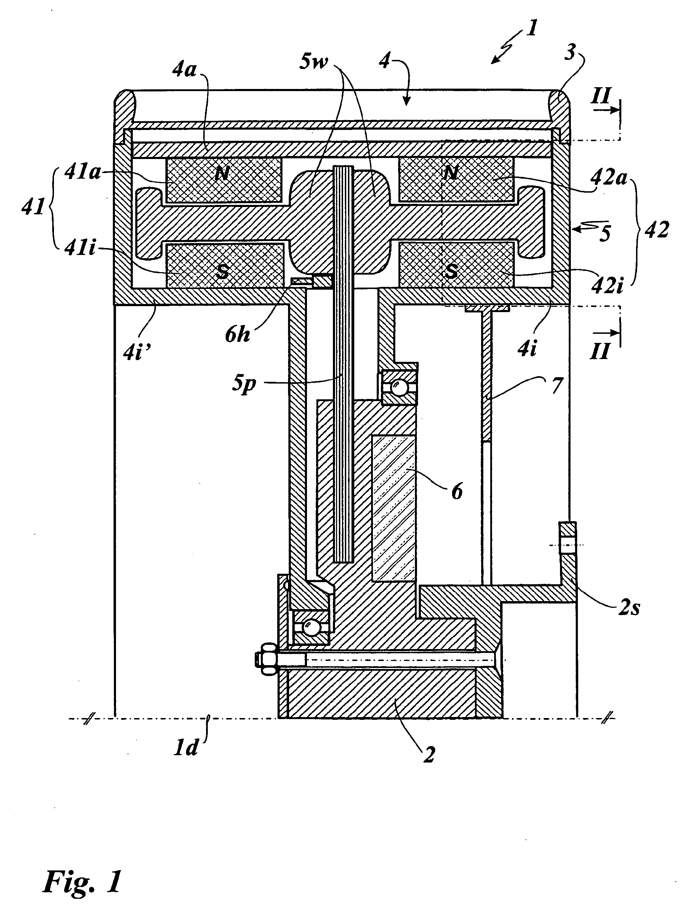

Fig. 1 zeigt eine als Radnabenmotor 1 ausgebildete elektrische Maschine. Der Abtrieb des Radnabenmotors 1 ist als eine Radfelge 3 zur Aufnahme eines Reifens ausgebildet und das Gestell des Radnabenmotors 1 ist als eine Radnabe 2 ausgebildet. Die Radnabe 2 des Radnabenmotors 1 ist auf einen Nabensitz 2s aufgenommen, der an einer in Fig. 1 nicht dargestellten Achse bzw. einen Achsstummels eines Fahrzeuges montierbar ist. Bei dem Fahrzeug kann es sich beispielsweise um ein mit Elektroenergie angetriebenes Automobil oder um ein Hybridfahrzeug handeln, das durch einen Verbrennungsmotor und einen oder mehrere Elektromotore angetrieben ist. Die Motordrehachse des Radnabenmotors 1 ist mit 1d bezeichnet.

Der Radnabenmotor 1 ist als eisenloser Außenläufermotor aufgebaut und weist einen mit Permanentmagneten ausgebildeten Rotor 4 und einen Stator 5 auf, der mit einer Feldwicklung 5w mit eisenlosen Feldspulen 51 bis 55 ausgebildet ist. Der Rotor 4 ist drehfest mit der Radfelge 3 verbunden. Der Stator 5 ist drehfest mit der Radnabe 2 verbunden.

Der Rotor 4 und der Stator 5 sind aus zwei spiegelbildlich zueinander angeordneten im wesentlichen gleich aufgebauten Abschnitten aufgebaut, die jeder für sich einen Außenläufermotor bilden. Durch den Aufbau des Radnabenmotors 1 aus zwei spiegelbildlich zueinander angeordneten Teilmotoren werden in den Lagern des Motors statische und/oder dynamische Querkräfte vermieden, wie sie beispielsweise bei den so genannten Topfmotoren auftreten können und deshalb deren Anwendungsbereich auf kleine Abtriebsleistung beschränken.

Der Rotor 4 weist ein Rotorgehäuse mit einem Außenring 4a und einem in dem Außenring 4a angeordneten geteilten Innenring auf, der aus zwei längs der Motordrehachse hintereinander angeordneten Innenringen 4i und 4i` gebildet ist. Der Außenring 4a und die beiden Innenringe 4i, 4i' sind konzentrisch zur Motordrehachse 1 d angeordnet.

Die inneren Stirnseiten der Innenringe 4i, 4i' sind auf inneren Kreisringscheiben abgestützt, die über Kugellager mit der Radnabe 2 drehbar verbunden sind und sich in Richtung der Drehachse 1d radial erstrecken. Zwischen den beiden axial beabstandeten Kreisscheiben ist ein kreiszylinderförmiger Aufnahmeraum zur Aufnahme einer weiter unten beschriebenen Statorplatine 5p ausgebildet.

Die äußeren Stirnseiten der Innenringe 4i, 4i' gehen in äußere Kreisringscheiben über, die sich in Richtung der Radfelge 3 radial erstrecken und mit der Radfelge 3 drehfest verbunden sind.

Zwischen der Innenwand des Außenrings 4a und den Außenwänden der beiden Innenringe 4i, 4i' ist ein kreisringförmiger Aufnahmeraum ausgebildet für zwei konzentrisch zur Motordrehachse 1 d angeordnete Permanentmagnetringe 41, 42. Die Permanentmagnetringe weisen jeweils einen äußeren Magnetring 41 a, 42a und einen inneren Magnetring 41 i, 42i auf, wobei zwischen der Innenwand des Magnetrings 41 a bzw. 42a und der Außenwand des Magnetrings 41 i bzw. 42i jeweils ein ringförmiger Luftspalt ausgebildet ist. Die Magnetringe sind aus voneinander beabstandeten Magneten gebildet. Sowohl übereinander als auch nebeneinander angeordnete benachbarte Magnete sind so ausgerichtet, dass ungleichnamige Magnetpole einander gegenüberstehen. Der ringförmige Luftspalt ist von der Feldwicklung 5w des Stators 5 durchgriffen.

Die Feldwicklung 5w ist in dem dargestellten Ausführungsbeispiel aus n Feldspuleneinheiten gebildet, die beidseitig der Statorplatine 5p angeordnet sind und jeweils fünf Feldspulen 51 bis 55 aufweisen. Die Statorplatine 5p kann aus einem elektrisch nichtleitenden Material ausgebildet sein und nach Art einer Trägerplatine für "gedruckte Schaltungen" mit elektrischen Leiterbahnen versehen sein. Die Statorplatine 5p ist in dem dargestellten Ausführungsbeispiel als kreisringförmige Platte ausgebildet, die drehfest mit der Radnabe 2 verbunden ist.

Der Radnabenmotor 1 weist weiter eine elektronische Steuereinheit 6 auf, die in einer Ausnehmung der Radnabe 2 angeordnet ist. Die Steuereinheit 6 kann alle zum Betrieb des Radnabenmotors 1 erforderlichen elektronischen Komponenten umfassen. Es kann jedoch vorteilhafterweise vorgesehen sein, elektronische Leistungsschaltglieder zur Ansteuerung der Feldspulen, wie beispielsweise Leistungstransistoren oder Triacs, auf der Statorplatine 5p unmittelbar an den Zuleitungen der Feldspulen anzuordnen. Auf diese Weise können Leitungsverluste minimiert werden. Weiter kann vorgesehen sein, dass die elektronischen Leistungsschaltglieder ein gemeinsames Schutzgehäuse aufweisen. Es kann auch vorgesehen sein, dass nicht alle auf der Statorplatine 5p angeordneten elektronischen Leistungsschaltglieder ein gemeinsames Schutzgehäuse aufweisen, sondern dass beispielsweise die Feldspulen einer Feldspuleneinheit ein gemeinsames Schutzgehäuse aufweisen, so dass für n Feldspuleneinheiten insgesamt n Schutzgehäuse vorgesehen sind.

Ein oder mehrere auf der Statorplatine 5p im Bereich eines der inneren oder der äußeren Magnetringe 41 i, 42i, 41 a, 42a angeordnete Hallsensoren 6h sind mit der Steuereinheit 6 verbunden. Die Hallsensoren 6h sind als Lagesensoren für den Rotor 4 vorgesehen. In dem in Fig. 1 dargestellten Ausführungsbeispiel sind fünf Hallsensoren 6h vorgesehen, die mit der Steuereinheit 6 über ein Dreileiter-Bussystem verbunden sind, wobei jeder der fünf Hallsensoren 6h einer der Feldspulen 51 bis 55 einer Feldspuleneinheit zugeordnet ist. Die Steuereinheit 6 ist in dem in Fig. 1 dargestellten Ausführungsbeispiel in einer Ausnehmung der Radnabe 2 angeordnet.

Weiter weist der Radnabenmotor 1 eine Bremsscheibe 7 auf, die mit in Fig. 1 nicht dargestellten Bremsbacken zusammenwirkt. Die Bremsscheibe 7 ist im hinteren Abschnitt des Rotors 4 an der Innenwand des Rotors angeordnet. Da der Radnabenmotor 1 zum Bremsen als Generator betrieben werden kann (Motorbremse), ist die Bremsscheibe 7 vorzugsweise als Teil einer Feststellbremse oder einer Betriebsbremse bei einem Motordefekt und/oder bei Unterbrechung der Stromzuführung zum Radnabenmotor 1 oder als Teil einer Zusatzbremse vorgesehen.

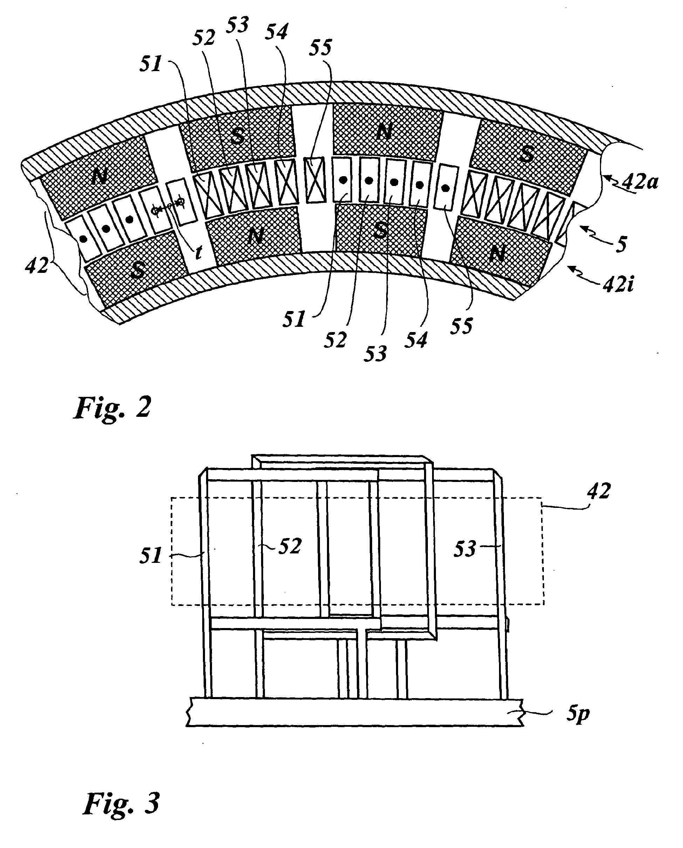

Die Fig. 2 zeigt nun die Anordnung der Feldspulen 51 bis 55 im Luftspalt des Rotors 4. In der in Fig. 2 dargestellten Rotorstellung tauchen die Feldspulen 51 bis 54 in die Luftspalte zweier benachbarter Magnetpaare ein, die aus einander gegenüberstehenden Magneten der Permanentmagnetringe 41, 42 gebildet sind; wogegen die Feldspule 55 außerhalb der beiden benachbarten Magnetpaare positioniert ist.

Die Feldspulen 51 bis 55 sind als rahmenförmige Spulen ausgeführt, deren Zuleitungen auf der Statorplatine 5p kontaktiert sind. Die Feldspulen jeder Feldspuleneinheit sind auf einem Kreisbogen einander teilweise überlappend angeordnet, wobei wie weiter oben beschrieben, n Feldspuleneinheiten einen Vollkreis bilden. Es können beispielsweise n = 12 Feldspuleneinheiten vorgesehen sein, so dass der Kreisbogenwinkel einer Feldspuleneinheit 360°/12 = 30° beträgt. Der Radius des Kreisbogens entspricht dem mittleren Radius des zwischen dem äußeren und dem inneren Magnetring ausgebildeten Luftspaltes. Die Wicklungen der Feldspulen umschreiben annähernd ein Rechteck oder ein Quadrat, wobei die axialen Abschnitte der Spulenwicklungen, d.h. die parallel zur Motordrehachse 1d gerichteten Abschnitte, in den besagten ringförmigen Luftspalt zwischen den Magnetringen eintauchen. Die tangentialen Abschnitte der Spulenwicklungen verlaufen außerhalb des Luftspaltes und verbinden die axialen Abschnitte so miteinander, dass der elektrische Pfad von der einen Zuleitung zu der anderen Zuleitung geschlossen ist.

Es kann vorgesehen sein, dass auf die Verbindungsleitungen und/oder die Zuleitungen der Feldspulen jeweils mindestens eine Ferritperle gefädelt ist. Der durch die Ferritperlen hervorgerufene induktive Widerstand sorgt für die Glättung von Impulsspitzen und kann den elektrischen Wirkungsgrad des Radnabenmotors 1 verbessern.

Wie in Fig. 2 gezeigt, ist der Stromfluss in den beiden axialen Abschnitten der Feldspulenwicklung entgegengesetzt gerichtet. In Fig. 2 ist der in die Zeichenebene gerichtete Stromfluss mit einem Kreuz und der aus der Zeichenebene gerichtete Stromfluss durch einen Punkt bezeichnet. Weil zugleich der Magnetfluss zweier benachbarter Magnetpaare unterschiedlich gerichtet ist, wirken die von den axialen Abschnitte der Feldspulenwicklungen ausgeübten Abstoßungskräfte in gleicher Richtung.

In der in Fig. 2 dargestellten Drehlage des Rotors 4 vermag die Feldspule 55 keine Abstoßungskraft auf den Rotor 4 auszuüben, weil sie außerhalb des Luftspaltes steht. Deshalb kann der Stromfluss durch die Feldspule 55 verringert oder unterbrochen werden, bis die Feldspule 55 wieder in den Luftspalt eintaucht. Auf diese Weise kann die mittlere Stromaufnahme des Radnabenmotors 1 bei gleicher mechanischer Leistung verringert sein. Zur exakten Lagebestimmung des Rotors 4 sind die weiter oben beschriebenen Hallsensoren 6h vorgesehen.

Wie in Fig. 2 gezeigt, sind die in den Luftspalt eintauchenden aktiven Abschnitte der Feldspulen mit gleichem Teilungsabstand t angeordnet. Bei dem Teilungsabstand handelt es sich nicht um den Abstand zwischen aktiven Abschnitten zweier benachbarter Feldspulen, beispielsweise der Hinterkante des einen Abschnitts und der Vorderkante des anderen Abschnitts, sondern um den Abstand analoger Strecken bzw. Punkte der Abschnitte, beispielsweise um den Abstand der Vorderkante des einen Abschnitts zu der Vorderkante des anderen Abschnitts oder um den Abstand der Mittelpunkte der beiden Abschnitte. Der Teilungsabstand kann durch den Abstand auf der Mantelfläche des durch die Feldspulen gebildeten Hohlzylinders bestimmt sein oder durch einen Winkelabstand, wobei der Scheitelpunkt des Teilungswinkels mit der Drehachse des Rotors zusammenfällt. Die beiden aktiven Wicklungsabschnitte der Feldspulen haben den Abstand A = m • t, wobei t den Teilungsabstand der m Feldspulen bezeichnet.

Die Fig. 3 zeigt nun den prinzipiellen Aufbau der Feldspulen 51 bis 55, wobei der besseren Übersichtlichkeit wegen nur die ersten drei Feldspulen 51 bis 53 der Feldspuleneinheit dargestellt sind.

Damit die Feldspulen ohne gegenseitige Behinderung montierbar sind, ist vorgesehen, die Feldspulen als Flachspulen auszubilden und gegebenenfalls durch Faltung der Wicklung axiale und tangentiale Abschnitte um 90° gegeneinander zu verschwenken, so dass Kollisionen benachbarter Feldspulen vermieden sind. In Fig. 3 sind die tangentialen Abschnitte der drei Feldspulen 51 bis 53 U-förmig zueinander angeordnet, so dass die tangentialen Abschnitte der Feldspule 51 über der Feldspule 52 verlaufen und die tangentialen Abschnitte der Feldspule 53 unter der Feldspule 52 verlaufen. Die axialen Abschnitte der Feldspulen sind ohne Tiefenversatz angeordnet (Fig. 2).

Die mittlere Feldspule 52 ist kastenförmig ausgebildet, d.h. keiner der Abschnitte der Spulenwicklung ist gegen einen anderen gefaltet.

Bei der über der Feldspule 52 angeordneten Feldspule 51 sind die beiden tangentialen Abschnitte gegenüber den axialen Abschnitten gefaltet, so dass die tangentialen Abschnitte der Feldspule 51 in der Quererstreckung mit den korrespondierenden tangentialen Abschnitten der Feldspule 52 einen Winkel von 90° bilden.

In analoger Weise sind die tangentialen Abschnitte der unter der Feldspule 52 angeordneten Feldspule 53 gefaltet und bilden in der Quererstreckung mit den korrespondierenden tangentialen Abschnitten der Feldspule 52 einen Winkel von - 90°.

Infolge der vorzugsweise vorgesehenen Ausbildung der Feldspulen 51 bis 55 als Flachspulen kann die Spulenwicklung auch aus Bandmaterial ausgebildet sein, beispielsweise aus einer elektrisch isolierenden Trägerfolie und einer auf der Trägerfolie aufgebrachten elektrisch leitfähigen Schicht. Das kann besonders vorteilhaft sein, um die Dicke der elektrisch leitfähigen Schicht dem Skin-Effekt entsprechend zu optimieren. Als Skin-Effekt wird der Effekt bezeichnet, dass ein Wechselstrom nur in oberflächennahen Schichten eines elektrischen Leiters transportiert wird. Die Eindringtiefe des Stromes ist umso geringer, je höher die Frequenz ist. Weil es sich bei der Betriebsspannung des Radnabenmotors 1 um eine impulsförmige Gleichspannung handelt, ist der Skin-Effekt an den Feldspulen zu beobachten. Es kann also vorgesehen sein, den Stromtransport auf viele übereinander liegende dünne elektrisch leitende Schichten aufzuteilen. Dünne Schichten können auch aus elektrischen Leitungsmaterialien ausgeformt werden, die in Drahtform nicht oder nur sehr schlecht zu Wicklungen mit so kleinem Wickelradius formbar sind, wie er an den vorstehend beschriebenen Faltungen auftritt.

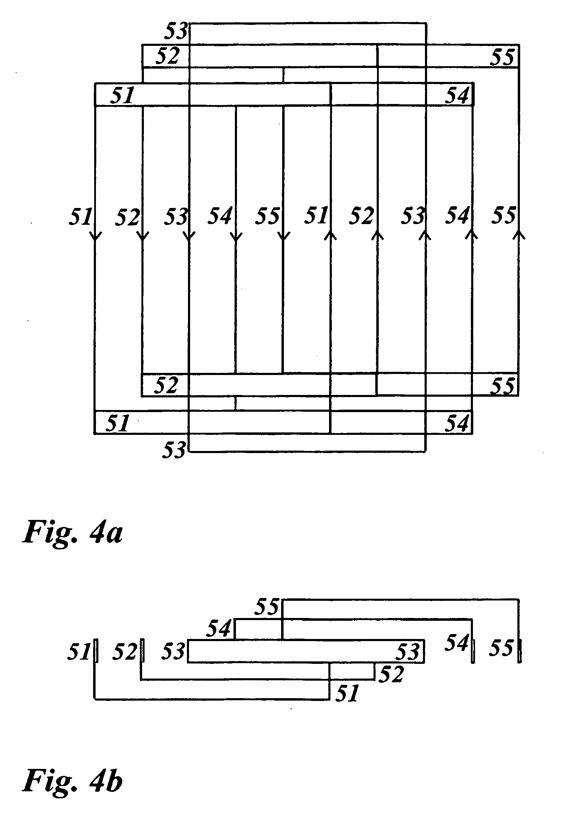

Die Fig. 4a und 4b zeigen nun den Wicklungsaufbau für Feldspuleneinheiten mit fünf Feldspulen in einer gegenüber Fig. 3 schematisierten Darstellung.

Fig. 4a zeigt die Feldspuleneinheit in der Draufsicht, wobei die Zuleitungen zu den Feldspulen nicht dargestellt sind, Fig. 4b in der Seitenansicht. In der aus den übereinander angeordneten Feldspulen 51 bis 55 bestehenden Feldspuleneinheit ist die Feldspule 53 die mittlere Feldspule. Über der mittleren Feldspule 53 sind die Feldspulen 51 und 52 und unter der Feldspule 53 sind die Feldspulen 54 und 55 angeordnet.

Zur kollisionsfreien Anordnung der fünf Feldspulen kann vorgesehen sein, dass die mittlere Feldspule 53 eine so große axiale Erstreckung hat, dass die mit kleinerer axialer Erstreckung ausgebildeten übrigen Feldspulen tiefenversetzt innerhalb der axialen Erstreckung der Feldspule 53 angeordnet sind. Durch die Tiefenstaffelung benachbarter Feldspulen 51, 52 bzw. 54, 55 und das Umfalten der tangentialen Abschnitte dieser Feldspulen um 90° bzw. - 90° können die Feldspulen 51 bis 55 kollisionsfrei zu der bezeichneten Feldspuleneinheit (siehe Fig. 2) zusammengefügt werden.

Das hier beschriebene Prinzip kann auf alle Feldspuleneinheiten mit ungerader Anzahl der Feldspulen angewendet werden. Es ist auch auf Feldspuleneinheiten mit gerader Anzahl der Feldspulen anwendbar, indem eine in der Höhenerstreckung asymmetrische Feldspuleneinheit vorgesehen ist, bei der die Feldspule mit der größten axialen Erstreckung um einen Platz aus der mittleren Position nach oben oder unten versetzt angeordnet ist.

Fig. 4b zeigt in der Seitenansicht, dass die in den ringförmigen Luftspalt zwischen zwei koaxial angeordneten Rotorringen eintauchenden radialen Abschnitte der Feldspulen 51 bis 55 kollisionsfrei nebeneinander angeordnet sind.

Wie in Fig. 1 schematisch dargestellt, können die Feldspulen vergossen sein und so einen kompakten, mechanisch stabilen und vor äußeren Einflüssen geschützten Aufbau bilden. Bei der Vergussmasse kann es sich um einen gießfähigen Kunststoff handeln, beispielsweise um ein Epoxidharz. Es kann vorgesehen sein, dass alle Feldspulen miteinander vergossen sind oder dass die Feldspulen abschnittsweise miteinander vergossen sind, beispielsweise die Feldspulen einer Feldspuleneinheit miteinander vergossen sind. Die Vergussmasse kann stoffschlüssig und/oder formschlüssig mit der Statorplatine 5p verbunden sein.

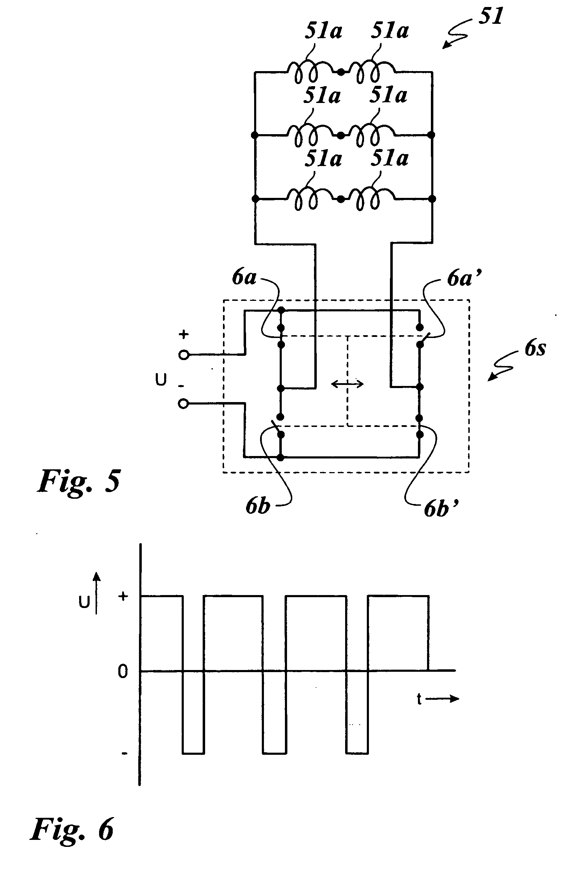

Die Fig. 5 und 6 zeigt nun den prinzipiellen Aufbau und die prinzipielle Wirkungsweise einer für den Betrieb des Radnabenmotors 1 vorgesehenen Pulsweitensteuerung. Ein Schaltmodul 6s weist in dem in Fig. 5 dargestellten Ausführungsbeispiel vier Ein-Aus-Schalter 6a, 6b, 6a' und 6b' auf, wobei die Schalter 6a und 6a' sowie 6b und 6b` einen Wechselschalter bilden. Die Schalter können beispielsweise als elektronische Schalter, wie Transistoren oder Triacs ausgebildet sein und elektronisch angesteuert werden. Dabei können die vier Schalter 6a bis 6b' des Schaltmoduls 6s unmittelbar an den Anschlüssen der Feldspulen auf der Statorplatine 5p angeordnet sein, wogegen die Schaltung zur Ansteuerung der Schalter 6a bis 6b' in die elektronische Steuereinheit 6 integriert sein kann. Die vier Schalter 6a bis 6b' sind in einer Brückenschaltung angeordnet und bilden so einen zweipoligen Umschalter, dessen Eingang mit einer Gleichspannungsquelle mit der Betriebsspannung U verbunden ist und dessen Ausgang mit der Feldspule verbunden ist. In dem in Fig. 5 dargestellten Ausführungsbeispiel handelt es sich um die Feldspule 51, die 6 miteinander verbundene Wicklungsabschnitte 51a aufweist. Jeweils zwei Wicklungsabschnitte 51a sind in Reihe geschaltet, wobei die durch Reihenschaltung miteinander verbundenen Abschnitte parallel geschaltet sind. Die Wicklungsabschnitte können beispielsweise durch Verschweißen miteinander verbunden sein. Das Parallelschalten von Wicklungsabschnitten kann, wie weiter oben ausgeführt, wegen des Skin-Effekts vorgesehen sein.

Wenn, wie in Fig. 5 gezeigt, zunächst die beiden Schalter 6a und 6b' geschlossen sind und die beiden Schalter 6a' und 6b geöffnet sind, ist der Stromfluss vom Pluspol der Gleichspannungsquelle über den Schalter 6a, die Feldwicklung 51 und den Schalter 6b` zum Minuspol der Gleichspannungsquelle gerichtet. Nach dem Umschalten ist der Stromfluss vom Minuspol der Gleichspannungsquelle über den Schalter 6b, die Feldwicklung 51 und den Schalter 6a' zum Pluspol der Gleichspannungsquelle gerichtet, d.h. der Stromfluss durch die Feldwicklung 51 ist umgekehrt.

Wie Fig. 6 zeigt, kann der Spannungsverlauf am Ausgang des Schaltmoduls 6s als Pulsfolge positiver und negativer Impulse dargestellt werden. Durch Variation der Pulsweite, d.h. der Zeitdauer der positiven und negativen Impulse, kann die Drehrichtung und die Umdrehungszahl des Radnabenmotors 1 eingestellt werden.

In dem in Fig. 6 dargestellten Ausführungsbeispiel weisen die positiven Impulse eine größere Pulsweite auf als die negativen Impulse, wobei die negativen Impulse der eingenommenen Drehbewegung entgegenwirken, so dass der Radnabenmotor nicht die maximale Drehzahl erreicht. Durch weiteres Verkleinern der Pulsweite der negativen Impulse kann die Drehzahl des Radnabenmotors erhöht werden. Durch Vergrößern der Pulsweite der negativen Impulse kann die Drehzahl des Radnabenmotors bis zum Stillstand verringert werden. Der Motor kommt zum Stillstand, wenn die Pulsweite der negativen und der positiven Impulse gleich ist oder wenn die Stromzufuhr unterbrochen ist. Das "Rütteln" des Motors bei Stillstand oder bei kleinen Drehzahlen kann für den Langsamlauf von Vorteil sein, da auf diese Weise die bremsende Wirkung von Lagerreibungen reduziert wird. Durch weiteres Vergrößern der Pulsweiten der negativen Impulse und/oder Verkleinern der Pulsweiten der positiven Impulse kann die Drehrichtung des Radnabenmotors 1 umgekehrt werden. Es kann also vorgesehen sein, durch die Steuerung des Impulsverhältnisses, d.h. des Verhältnisses der Pulsweite der positiven Impulse zu den negativen Impulsen oder umgekehrt die Drehzahl des Radnabenmotors 1 zu steuern.

Es kann aber auch vorgesehen sein, den Motor nur durch positive oder durch negative Impulse zu steuern. In diesem Falle bestimmt das Verhältnis zwischen der Pulsdauer und der Pausenzeit zwischen zwei Impulsen die Drehzahl des Radnabenmotors 1.

Die Feldspulen einer Feldspuleneinheit werden nun zeitlich aufeinanderfolgend so angesteuert, dass ein Drehfeld erzeugt wird, welches den Rotor 4 in Drehung versetzt. Dabei erzeugen die rotierenden Permanentmagneten des Rotors 4 in den Hallsensoren 6h Signalspannungen, die durch die Steuereinheit 6 ausgewertet werden und die aktuelle Drehlage des Rotors 4 bestimmen. Zur Motorsteuerung ist also kein Kommutator benötigt. Es handelt sich bei dem erfindungsgemäßen Radnabenmotor 1 um einen kommutatorlosen Gleichstrommotor, der wegen seines einfachen Aufbaus und der gewichtssparenden kernlosen Ausbildung der Feldspulen einen vorteilhaften Direktantrieb für Fahrzeugräder bilden kann.

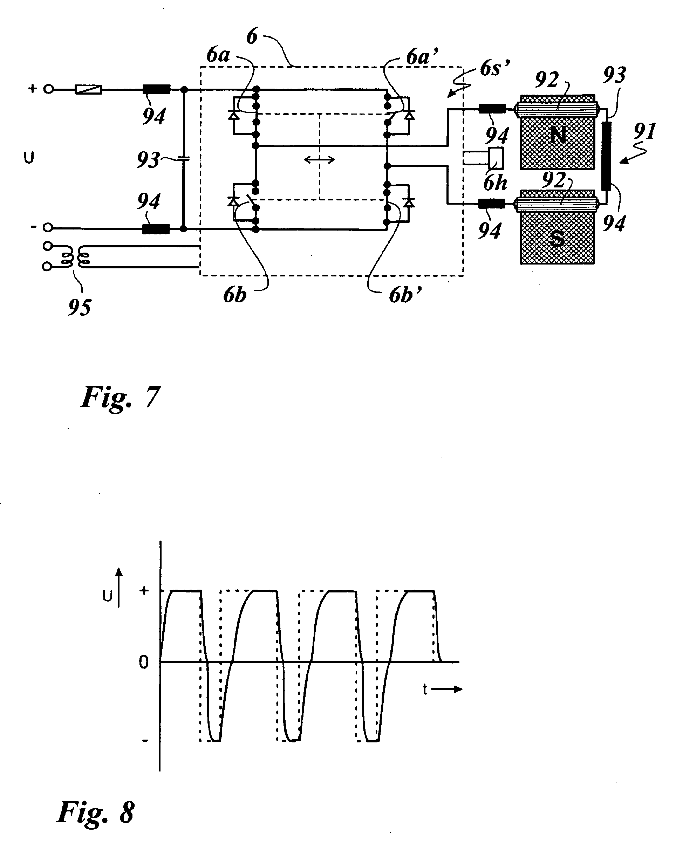

Fig. 7 zeigt nun ein Schaltmodul 6s', bei dem die Schalter 6a bis 6b' jeweils durch eine Diode überbrückt sind. Eine Feldspule 91 weist zwei Wicklungsabschnitte 92 auf, die in dem in Fig. 7 dargestellten Ausführungsbeispiel als ein mehrlagiges Wicklungspaket ausgebildet sind. Die elektrisch leitenden Schichten des Wicklungspakets sind durch Isolierschichten voneinander isoliert. Die Wicklungsabschnitte 92 sind durch einen Verbindungsabschnitte miteinander verbunden. Den Verbindungsabschnitt sowie die Zuleitungen der Feldspule 91 durchgreifen rohrförmige Ferritkörper 94. Die Ferritkörper 94 bilden zusammen mit dem Verbindungsabschnitt bzw. den Zuleitungen Induktivitäten, die Stromänderungen in der Feldspule 91 entgegenwirken und so Stromspitzen abbauen. Daraus kann ein weicherer Lauf der elektrischen Maschine folgen. Weitere rohrförmige Ferritkörper 94 umgreifen die mit der Gleichspannungsquelle verbundenen Zuleitungen der Steuereinheit 6. Direkt am Stromversorgungs-Eingang der Steuereinheit 6 ist ein Kondensator 93 angeordnet, der die beiden Stromzuleitungen zur Steuereinheit überbrückt. Er hat die Aufgabe, Rücklaufspannungen zu puffern, die immer dann entstehen, wenn die Pulsrichtung wechselt. Der Kondensator 93 kann auf der Statorplatine 5p angeordnet sein. Zur Ansteuerung der Steuereinheit 6 ist eine induktive Ankopplung 95 vorgesehen.

Fig. 8 zeigt das durch die Ferritkörper 94 in Fig. 7 geprägte Spannungs-Zeit-Diagramm der Pulsweitensteuerung. In Fig. 8 ist zum Vergleich das Spannungs-Zeit-Diagramm in Fig. 6 mit gestrichelten Linien eingezeichnet, das durch rechteckförmige Impulse gekennzeichnet ist. Demgegenüber sind in Fig. 8 die ehemals senkrechten Impulsflanken verformt, weil die Ferritkörper 94 als Dämpfungsglieder wirken, wie in Fig. 7 beschrieben. Die Impulsflanken sind nun geneigt mit kurvenförmigem Verlauf.

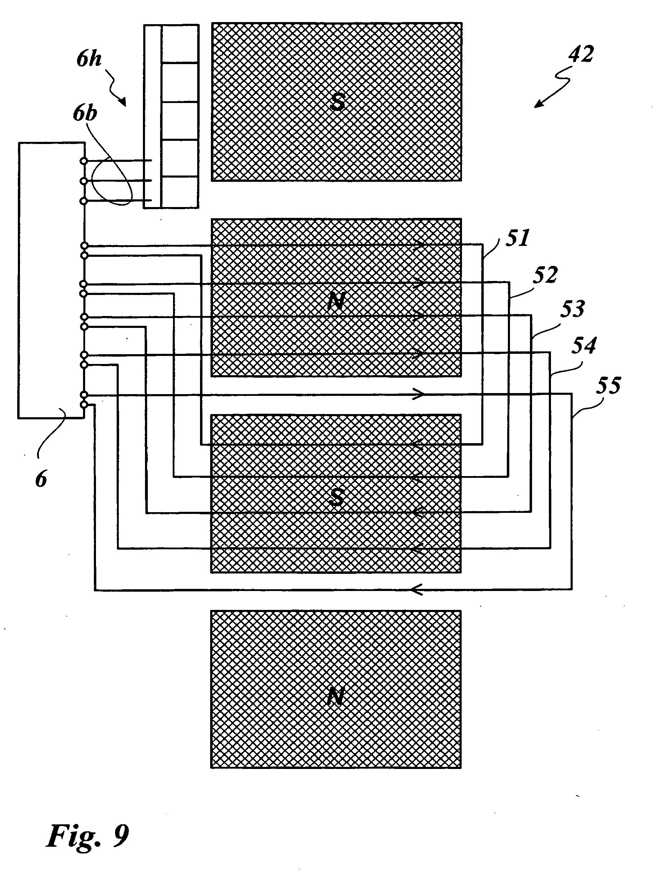

Fig. 9 zeigt nun eine schematische Darstellung zur Veranschaulichung des Wirkprinzips des Radnabenmotors 1. Die elektronische Steuereinheit 6 ist mit den Feldspulen 51 bis 55 verbunden, die so einander überlappend angeordnet sind, dass Wicklungsabschnitte mit gleicher Stromrichtung jeweils eine aufsteigende Reihe bilden (siehe auch Fig. 2). Jede der Feldspulen 51 bis 55 wirkt mit zwei Magnetpaaren zusammen, die nebeneinander angeordnet sind.

In Fig. 9 sind jeweils die unteren Magnete der Magnetpaare dargestellt, die den Magnetring 42 bilden. In der in Fig. 9 dargestellten Drehlage sind die Wicklungsabschnitte der Feldspulen 51 bis 54 in den Luftspalt zwischen den Magnetringen 41 und 42 eingetaucht; die Feldspule 55 ist außer Eingriff. Die Steuereinheit 6 speist in die Feldspulen 51 bis 54 pulsierenden Gleichstrom ein, wodurch um die in den Luftspalt eingetauchten Wicklungsabschnitte Magnetfelder ausgebildet sind, welche die Magnetringe 41 und 42 in Drehung versetzen.

Die fünf Hallsensoren 6h sind durch ein dreiadriges Datenbussystem 6b mit der Steuereinheit 6 verbunden. Sie sind im gleichen Abstand wie die Feldspulen angeordnet, so dass die Ausgangssignale der Hallsensoren eine Lageinformation für die Feldspulen 51 bis 55 bilden, die jeweils n-mal am Umfang des Rotors des Radnabenmotors angeordnet sind.

Die Feldspule 55, die sich in der in Fig. 9 dargestellten Drehlage des Rotors nicht in dem Luftspalt zwischen den Magnetringen 41 und 42 befindet, leistet keinen Beitrag zur Drehung des Rotors und ist daher durch die Steuereinheit 6 stromlos geschaltet.

Die Schaltmodule 6s (Fig. 5) bzw. 6s' (Fig. 7) sind insgesamt fünfmal vorhanden, denn wie in Fig. 2 und Fig. 4a, b dargestellt, ist jede Feldspuleneinheit mit fünf Feldspulen 51 bis 55 ausgebildet. Die Feldspulen 51 bis 55 jeder Feldspuleneinheit bilden also fünf Gruppen, die unabhängig voneinander steuerbar sind, wie auch in Fig. 9, Pos. 6, erkennbar. Wenn also in einer Gruppe eine oder mehrere Feldspulen ausfallen, dann stehen noch 4 Gruppen zur Verfügung, so dass nur eine Leistungseinbuße von 20 % zu verzeichnen ist. Das Gleiche gilt, wenn eines der fünf Schaltmodule ausfällt. Da der Radnabenmotor 1 (Fig. 1) zwei spiegelbildlich zueinander angeordnete Teilmotore aufweist, beträgt die Leistungseinbuße in dem beschriebenen Beispiel nur 10 %! Der erfindungsgemäße Radnabenmotor weist also durch seine konstruktive Gestaltung eine hohe Zuverlässigkeit auf, so dass bei dem angenommenen Motordefekt die Fahrt mindestens bis zur nächsten Werkstatt fortgesetzt werden kann.

## Patentansprüche

1. Radnabenmotor (1) mit einem mit einer Radnabe (2) drehfest verbundenen Stator (5) und einen mit einer Radfelge (3) drehfest verbundenen Rotor (4), aufweisend mit einer Steuereinheit (6) verbundene eisenlose Feldspulen (51 bis 55) und Permanentmagnetringe (41, 42) mit einem ringförmigen Luftspalt, wobei in den Luftspalt eintauchende Abschnitte der Feldspulen (51 bis 55) parallel zur Drehachse (1d) des Radnabenmotors (1) ausgerichtet sind,
**dadurch gekennzeichnet,**
**dass** der Radnabenmotor (1) aus zwei gleichartigen Teilmotoren aufgebaut ist, wobei die Wickelkörper (5w) beider Teilmotoren einander zugewandt auf einer gemeinsamen Trägerplatine (5p) angeordnet sind.

2. Radnabenmotor nach Anspruch 1,
**dadurch gekennzeichnet,**
**dass** die Feldspulen (51 bis 55) zumindest abschnittsweise aus Flachbandmaterial ausgebildet sind.

3. Radnabenmotor nach Anspruch 2,
**dadurch gekennzeichnet,**
**dass** es sich bei dem Flachbandmaterial um einen Folienkörper mit einer elektrisch isolierenden Trägerfolie und einer auf der Trägerfolie angeordneten elektrisch leitfähigen Schicht handelt.

4. Radnabenmotor nach einem der vorangehenden Ansprüche,
**dadurch gekennzeichnet,**
**dass** die Feldspulen (51 bis 55) als Rahmenspulen ausgebildet sind.

5. Radnabenmotor nach einem der vorangehenden Ansprüche,
**dadurch gekennzeichnet,**
**dass** die Feldspulen (51 bis 55) einen freitragenden vorzugsweise topfförmigen Wickelkörper (5w) bilden.

6. Radnabenmotor nach Anspruch 5,
**dadurch gekennzeichnet,**
**dass** der Wickelkörper (5w) in eine Vergussmasse eingebettet ist.

7. Radnabenmotor nach Anspruch 5 oder 6,
**dadurch gekennzeichnet,**
**dass** der Wickelkörper (5w) mit der Trägerplatine (5p) stoffschlüssig und/oder formschlüssig verbunden ist.

8. Radnabenmotor nach einem der vorangehenden Ansprüche,
**dadurch gekennzeichnet,**
**dass** jeder der Permanentmagnetringe (41, 42) aus 2 • n Magnetpaaren ausgebildet sind und pro Permanentmagnetring (41, 42) m • n Feldspulen (51 bis 55) vorgesehen sind, die n Feldspuleneinheiten bilden, die abschnittsweise in den ringförmigen Luftspalt eintauchen.

9. Radnabenmotor nach Anspruch 8,
**dadurch gekennzeichnet,**
**dass** die Anzahl m der Feldspulen (51 bis 55) einer Feldspuleneinheit m≥ 1 ist, vorzugsweise dass m = 3 bis 5 ist.

10. Radnabenmotor nach Anspruch 8 oder 9,
**dadurch gekennzeichnet,**
**dass** jeweils die erste bis m-te der m Feldspulen (51 bis 55) einer Feldspuleneinheit eine voneinander unabhängig steuerbare Feldspulengruppe bilden, die mit jeweils einer von m Endstufen der Steuereinheit (6) verbunden ist.

11. Radnabenmotor nach einem der Ansprüche 8 bis 10,
**dadurch gekennzeichnet,**
**dass** die m Feldspulen (51 bis 55) einer Feldspuleneinheit mit teilweiser Überlappung angeordnet sind.

12. Radnabenmotor nach einem der Ansprüche 8 bis 11,
**dadurch gekennzeichnet,**
**dass** die magnetischen Feldlinien der Magnetpaare radial gerichtet sind.

13. Radnabenmotor nach einem der Ansprüche 8 bis 12,
**dadurch gekennzeichnet,**
**dass** zwei aufeinanderfolgende Magnetpaare mit entgegengesetzter magnetischer Flussrichtung ausgebildet sind.

14. Radnabenmotor nach einem der Ansprüche 8 bis 13,
**dadurch gekennzeichnet,**
**dass** zwei aufeinanderfolgende Magnetpaare mit Abstand zueinander angeordnet sind.

15. Radnabenmotor nach einem der vorangehenden Ansprüche,
**dadurch gekennzeichnet,**
**dass** die Feldspule (51 bis 55) stromlos geschaltet ist, wenn der Rotor (4) eine Drehlage einnimmt, bei der die in den Luftspalt des Permanentmagnetrings (41, 42) eintauchenden Wicklungsabschnitte der Feldspule (51 bis 55) sich außerhalb des Luftspalts befinden.

16. Radnabenmotor nach einem der vorangehenden Ansprüche,
**dadurch gekennzeichnet,**
**dass** die elektrischen Anschlüsse der Feldspule (51 bis 55) unmittelbar mit einem elektronischen Schaltglied (6a bis 6b') der Steuereinheit (6) verbunden sind.

17. Radnabenmotor nach einem der vorangehenden Ansprüche,
**dadurch gekennzeichnet,**
**dass** es sich bei der Steuereinheit (6) um eine Steuereinheit für Pulsweitenmodulation handelt.

18. Radnabenmotor nach einem der vorangehenden Ansprüche,
**dadurch gekennzeichnet,**
**dass** zur Drehlagebestimmung des Rotors (4) Hallsensoren (6h) vorgesehen sind.

19. Radnabenmotor nach einem der vorangehenden Ansprüche,
**dadurch gekennzeichnet,**
**dass** der Rotor (4) mit einer Bremsscheibe (7) drehfest verbunden ist.

20. Fahrbarer Transportstuhl mit einem Radnabenmotor (1) nach einem der Ansprüche 1 bis 19.

21. Elektrofahrzeug mit einem Radnabenmotor (1) nach einem der Ansprüche 1 bis 19.

22. Hybridfahrzeug mit einem Radnabenmotor (1) nach einem der Ansprüche 1 bis 19 sowie mit einem Verbrennungsmotor.

## Claims

1. Wheel hub motor (1) having a stator (5), which is connected to a wheel hub (2) such that they rotate together, and a rotor (4) which is connected to a wheel rim (3) such that they rotate together, having ironless field coils (51 to 55) which are connected to a control unit (6) and having permanent magnet rings (41, 42) with an annular air gap, wherein sections of the field coils (51 to 55) which enter the air gap are aligned parallel to the rotation axis (1d) of the wheel hub motor (1), **characterized in that** the wheel hub motor (1) is formed from two identical motor elements, wherein the winding formers (5w) of the two motor elements are arranged such that they face one another on a common mounting board (5p).

2. Wheel hub motor according to Claim 1, **characterized in that** the field coils (51 to 55) are formed, at least in places, from flat ribbon material.

3. Wheel hub motor according to Claim 2, **characterized in that** the flat ribbon material is a film body with an electrically insulating support film and with an electrically conductive layer arranged on the support film.

4. Wheel hub motor according to one of the preceding claims, **characterized in that** the field coils (51 to 55) are in the form of frame coils.

5. Wheel hub motor according to one of the preceding claims, **characterized in that** the field coils (51 to 55) form a self-supporting winding former (5w), preferably in the form of a pot.

6. Wheel hub motor according to Claim 5, **characterized in that** the winding former (5w) is embedded in an encapsulation compound.

7. Wheel hub motor according to Claim 5 or 6, **characterized in that** the winding former (5w) is connected integrally and/or in an interlocking manner to the mounting board (5p).

8. Wheel hub motor according to one of the preceding claims, **characterized in that** each of the permanent magnet rings (41, 42) is formed from 2·n magnet pairs, and m•n field coils (51 to 55) are provided for each permanent magnet ring (41, 42) and form n field coil units which enter the annular air gap, in places.

9. Wheel hub motor according to Claim 8, **characterized in that** the number m of field coils (51 to 55) in a field coil unit is m ≥ 1, preferably m = 3 to 5.

10. Wheel hub motor according to Claim 8 or 9, **characterized in that** the first to m-th of the m field coils (51 to 55) in a field coil unit each form a field coil group, which groups can be controlled independently of one another, and which field coil group is connected to in each case one of m output stages of the control unit (6).

11. Wheel hub motor according to one of Claims 8 to 10, **characterized in that** the m field coils (51 to 55) in a field coil unit are arranged such that they partially overlap.

12. Wheel hub motor according to one of Claims 8 to 11, **characterized in that** the magnetic lines of force of the magnet pairs are directed radially.

13. Wheel hub motor according to one of Claims 8 to 12, **characterized in that** two successive magnet pairs are formed with an opposite magnetic flux direction.

14. Wheel hub motor according to one of Claims 8 to 13, **characterized in that** two successive magnet pairs are arranged at a distance from one another.

15. Wheel hub motor according to one of the preceding claims, **characterized in that** the field coil (51 to 55) is switched off when the rotor (4) assumes a rotation position in which those winding sections of the field coil (51 to 55) which enter the air gap in the permanent magnet ring (41, 42) are located outside the air gap.

16. Wheel hub motor according to one of the preceding claims, **characterized in that** the electrical connections of the field coil (51 to 55) are directly connected to an electronic switching element (6a to 6b') of the control unit (6).

17. Wheel hub motor according to one of the preceding claims, **characterized in that** the control unit (6) is a control unit for pulse-width modulation.

18. Wheel hub motor according to one of the preceding claims, **characterized in that** Hall sensors (6h) are provided for determining the rotation position of the rotor (4).

19. Wheel hub motor according to one of the preceding claims, **characterized in that** the rotor (4) is connected to a brake disc (7) such that they rotate together.

20. Mobile wheelchair having a wheel hub motor (1) according to one of Claims 1 to 19.

21. Electrical vehicle having a wheel hub motor (1) according to one of Claims 1 to 19.

22. Hybrid vehicle having a wheel hub motor (1) according to one of Claims 1 to 19, and having an internal combustion engine.

## Revendications

1. Moteur sur moyeu de roue (1), comportant un stator (5), relié solidaire en rotation à un moyeu de roue (2), et un rotor (4), relié solidaire en rotation à une jante de roue (3), comportant des bobines excitatrices (51 à 55) sans noyau, reliées à une unité de commande (6), et des bagues à aimants permanents (41, 42) avec un entrefer annulaire, des zones des bobines excitatrices (51 à 55), lesquelles s'engagent dans l'entrefer, étant orientées parallèlement à l'axe de rotation (1 d) du moteur sur moyeu de roue (1),
**caractérisé en ce que** le moteur sur moyeu de roue (1) est formé par deux moteurs partiels de même type, les corps d'enroulement (5w) des deux moteurs partiels étant disposés sur une platine support (5p) commune en étant orientés l'un vers l'autre.

2. Moteur sur moyeu de roue selon la revendication 1, **caractérisé en ce que** les bobines excitatrices (51 à 55) sont réalisées au moins par zones dans un matériau en bande plate.

3. Moteur sur moyeu de roue selon la revendication 2, **caractérisé en ce que** le matériau en bande plate est un corps de feuille avec une feuille support électro-isolante et une couche électroconductrice déposée sur la feuille support.

4. Moteur sur moyeu de roue selon l'une quelconque des revendications précédentes, **caractérisé en ce que** les bobines excitatrices (51 à 55) sont réalisées sous la forme de bobines cadres.

5. Moteur sur moyeu de roue selon l'une quelconque des revendications précédentes, **caractérisé en ce que** les bobines excitatrices (51 à 55) forment un corps d'enroulement (5w) saillant, de préférence en forme de godet.

6. Moteur sur moyeu de roue selon la revendication 5, **caractérisé en ce que** le corps d'enroulement (5w) est enrobé dans une masse de scellement.

7. Moteur sur moyeu de roue selon la revendication 5 ou 6, **caractérisé en ce que** le corps d'enroulement (5w) est relié par conjugaison de matière et/ou par conjugaison de forme à la platine support (5p).

8. Moteur sur moyeu de roue selon l'une quelconque des revendications précédentes, **caractérisé en ce que** chacune des bagues à aimants permanents (41, 42) est formée par 2 • n paires d'aimants et pour chaque bague à aimants permanents (41, 42) sont prévues m • n bobines excitatrices (51 à 55), qui forment n unités de bobines excitatrices, qui s'engagent par zones dans l'entrefer annulaire.

9. Moteur sur moyeu de roue selon la revendication 8, **caractérisé en ce que** le nombre m des bobines excitatrices (51 à 55) d'une unité de bobines excitatrices est m ≥ 1, de préférence **en ce que** m = 3 à 5.

10. Moteur sur moyeu de roue selon la revendication 8 ou 9, **caractérisé en ce que** respectivement la première jusqu'à la m^{ième} des m bobines excitatrices (51 à 55) d'une unité de bobines excitatrices forment un groupe de bobines excitatrices pouvant être commandé indépendamment les uns des autres et relié à respectivement l'un des m niveaux finals de l'unité de commande (6).

11. Moteur sur moyeu de roue selon l'une quelconque des revendications 8 à 10, **caractérisé en ce que** les m bobines excitatrices (51 à 55) d'une unité de bobines excitatrices sont disposées avec un chevauchement partiel.

12. Moteur sur moyeu de roue selon l'une quelconque des revendications 8 à 11, **caractérisé en ce que** les lignes de champ magnétique des paires d'aimants sont orientées radialement.

13. Moteur sur moyeu de roue selon l'une quelconque des revendications 8 à 12, **caractérisé en ce que** deux paires d'aimants successives sont réalisées avec une direction de flux magnétique opposée.

14. Moteur sur moyeu de roue selon l'une quelconque des revendications 8 à 13, **caractérisé en ce que** deux paires d'aimants successives sont disposées à distance l'une de l'autre.

15. Moteur sur moyeu de roue selon l'une quelconque des revendications précédentes, **caractérisé en ce que** les bobines excitatrices (51 à 55) ne sont pas alimentées en courant, lorsque le rotor (4) est dans une position de rotation, dans laquelle des zones d'enroulement des bobines excitatrices (51 à 55), lesquelles s'engagent dans l'entrefer de la bague à aimants permanents (41, 42), se situent en dehors de l'entrefer.

16. Moteur sur moyeu de roue selon l'une quelconque des revendications précédentes, **caractérisé en ce que** les raccords électriques des bobines excitatrices (51 à 55) sont reliés directement à un organe de commutation (6a à 6b') électronique de l'unité de commande (6).

17. Moteur sur moyeu de roue selon l'une quelconque des revendications précédentes, **caractérisé en ce que** l'unité de commande (6) est une unité de commande pour une modulation d'impulsions en largeur.

18. Moteur sur moyeu de roue selon l'une quelconque des revendications précédentes, **caractérisé en ce que** des capteurs à effet Hall (6h) sont prévus pour déterminer la position de rotation du rotor (4).

19. Moteur sur moyeu de roue selon l'une quelconque des revendications précédentes, **caractérisé en ce que** le rotor (4) est relié solidaire en rotation à un disque de frein (7).

20. Fauteuil roulant avec un moteur sur moyeu de roue (1) selon l'une quelconque des revendications 1 à 19.

21. Véhicule électrique avec un moteur sur moyeu de roue (1) selon l'une quelconque des revendications 1 à 19.

22. Véhicule hybride avec un moteur sur moyeu de roue (1) selon l'une quelconque des revendications 1 à 19, ainsi qu'avec un moteur à combustion interne.
